# EUROPEAN PATENT SPECIFICATION

(11) **EP 2 787 461 B1**
(45) Date of publication and mention of the grant of the patent: **19.06.2019**
(21) Application number: 12831995.1
(22) Date of filing: 06.11.2012
(51) Int. Cl.: G06F 21/00, G06F 21/10

(54) **SECURE DIGITAL CONTENT SHARING METHOD, DEVICE, AND SYSTEM**
SICHERES VERFAHREN ZUM GEMEINSAMEN NUTZEN VON DIGITALEN INHALTEN, VORRICHTUNG UND SYSTEM
PROCÉDÉ, DISPOSITIF ET SYSTÈME DE PARTAGE DE CONTENU NUMÉRIQUE SÉCURISÉ

(43) Date of publication of application: 08.10.2014
(73) Proprietor: Peking University, Beijing 100871 (CN); Peking University Founder Group Co., Ltd, Beijing 100085 (CN); Founder Information Industry Holdings Co., Ltd., Beijing 100871 (CN); Beijing Founder Apabi Technology Ltd, Beijing 100080 (CN)
(72) Inventor: QIU, Qin, Beijing 100080 (CN); YU, Yinyan, Beijing 100080 (CN); TANG, Zhi, Beijing 100080 (CN)
(74) Representative: Cohausz & Florack
(86) International application number: PCT/CN2012/084150
(87) International publication number: WO 2013/037329

(56) References cited:
- CN-A- 101 159 748
- CN-A- 101 257 386
- CN-A- 102 088 443
- US-A- 5 982 891
- US-A1- 2006 218 153
- US-A1- 2009 157 845

## Description

### Field of the Invention

The present invention relates to the technical field of digital copyright protection, and particularly, to a method, a device and a system for securely sharing digital contents.

### Background of the Invention

Information technologies have been deeply applied to every aspect of our daily life, with great increases in the quantity and value of digital contents. A great number of users buy or create digital contents, and share the contents with friends over a network, thus realizing the purposes of task cooperation and social intercourse.

The digital contents comprise commercialized contents with copyrights such as electronic books and digital films, and non-commercialized personal contents such as unpublished original works, private information, business letters and the like. The contents have high economic or social values, and may bring direct or indirect damages to the rights and interests of content owners in case of falling into the hands of illegal persons. Therefore, important digital contents need to be protected by adopting technical means.

At present, digital contents are protected by mainly adopting the following three technical means. The first one is a secure communication method, for example, PGP (Pretty Good Privacy) desktop Email is adopted, and through encrypting the digital contents, the method guarantees that only a target user with a decryption key can decrypt and use the digital contents. However, a problem of using the contents safely is not considered in the method: after the target user obtains and decrypts the digital contents, the use of the contents by the user is unlimited, and the decrypted digital content plaintexts can be randomly spread. The second one is access control technology: a content owner sets a designated user as a sharer for the digital contents in a system, the designated user can access the digital contents of the content owner after passing the identity authentication of the system. However, the problem of using the contents safely is not considered in the method either: the designated user can randomly spread the digital contents after obtaining the digital contents via authentication. The third one is digital copyright protection technology, for example, Microsoft Information Rights Management (IRM) is adopted. A content owner encrypts and packages the digital contents needing to be protected, and creates and issues an authorization license for a content user after determining the content user. In the license, authorized rights of the content user are declared, and a content decryption key bound with the identity information of the content user is also included. The content user analyzes the license through DRM (digital copyright management) software, and extracts the content decryption key from the license according to the identity information of the content user so as to decrypt the digital contents. The content user can only use the digital contents according to the rights specified in the license, and the DRM software does not allow the user to execute operations beyond the obtained rights. Although the method ensures that only the content user obtaining the authorization can use the digital contents according to the obtained rights, and realizes the purpose of protecting the contents, inconvenience is brought to the use, for example, the content user cannot share the contents with his/her own relatives and friends.

Patent application US2009157845 describes a way to share content in social networks including permissions depending on trust.

The inventors find that from the view of providing convenient and flexible user experience for users, the DRM system should allow the content user to share the authorized digital contents in a small range without prejudice to the rights and interests of the content owner. How to securely expand a usable range for the digital contents is the key problem to be solved by the present invention.

### Summary of the Invention

The embodiments of the present invention provide a method, a system and a device for securely sharing digital contents, and the method is used for solving the problem of how to securely expand a sharing range for the digital contents.

The method for securely sharing digital contents, comprising the following steps:
a second device transmitting a preset first content-sharing trust degree to a first device owning the digital contents; wherein the first content-sharing trust degree indicates a trust degree of the second device in a third device's being qualified to share the digital contents;
the first device determining a second content-sharing trust degree according to the received first content-sharing trust degree and a preset content-sharing recommending trust degree in accordance with a preset method, determining whether a condition of transmitting the digital contents to the third device is met according to the second content-sharing trust degree, and authorizing the third device to use the digital contents after determining that the condition is met;
wherein the second content-sharing trust degree indicates a trust degree of the first device in that the third device's being qualified to share the digital contents; and the content-sharing recommending trust degree indicates a trust degree of the first device in the second device's recommending the third device to share the digital contents.

A system for securely sharing digital contents, comprising:
a second device for transmitting a preset first content-sharing trust degree to first device owning the digital contents; wherein the first content-sharing trust degree indicates a trust degree of the second device in a third device's being qualified to share the digital contents;
the first device for determining a second content-sharing trust degree according to the received first content-sharing trust degree and a preset content-sharing recommending trust degree, determining whether a condition of authorizing the third device to use the digital contents is met according to the second content-sharing trust degree, and authorizing the third device to use the digital contents after determining that the condition is met; and
the third device for using the digital contents according to the received digital content package and an authorization license;
wherein the second content-sharing trust degree indicates a trust degree of the first device in the third device's being qualified to share the digital contents; and the content-sharing recommending trust degree indicates a trust degree of the first device in the second device's recommending the third device to share the digital contents.

A device for securely sharing digital contents, comprising:
a first reception module for receiving first content-sharing trust degree;
a first determination module for determining a second content-sharing trust degree according to the received first content-sharing trust degree and a preset content-sharing recommending trust degree by using a preset method;
a first judgement module for judging whether the second content-sharing trust degree meets a condition of authorizing the third device to use the digital contents; and
a first transmission module for authorizing the third device to use the digital contents after judging that the second content-sharing trust degree meets the condition of authorizing the third device to use the digital contents;
wherein the second content-sharing trust degree indicates a trust degree of the first device in the third device's being qualified to share the digital contents; and the content-sharing recommending trust degree indicates a trust degree of the first device in the second device's recommending the third device to share the digital contents.

A device for securely sharing digital contents, comprising:
a third reception module for receiving the digital content package and the authorization license transmitted from a first device; and
a third determination module for decrypting a content key cyphertext in the authorization license by using a private secret key to obtain a content key, and decrypting a content cyphertext in the digital package by using the content key to obtain a content plaintext when determining that a content identification in the digital content package corresponds to a content identification in the authorization license, and that a device identification in the digital content package corresponds to a device identification in the authorization license.

In the present invention, the digital content package and the authorization license may not be necessarily transmitted to the third device directly from the first device, and may be forwarded over other device, for example, P2P (peer-to-peer) transmission.

It can be seen that with the technical solution provided by the present invention, the second device recommends the third device to the first device, that is, the second device transmits its own preset first content-sharing trust degree to the first device; the first content-sharing trust degree indicates a trust degree of the second device in the third device's being qualified to share the digital content; the first device determines a second content-sharing trust degree according to the received first content-sharing trust degree and its own preset content-sharing recommending trust degree in accordance with a preset method, determines whether the condition of authorizing the third device to use the digital contents is met according to the second content-sharing trust degree, considers the third device to be qualified to share the digital contents when the condition is met, thereby taking the third device as its own sharing object, creating the authorization license and transmitting the authorization license to the third device. It can be seen that its own digital contents are authorized to the third device for use after the third device is determined to be a qualified sharing object in the method provided by the present invention; therefore, the method may properly ensure the security of expanding the sharing range of the digital contents.

### Brief Description of the Drawings

Fig. 1 is a schematic flow chart of a method for securely sharing digital contents provided by an embodiment of the present invention;
Fig. 2 is a schematic flow chart of a method for securely sharing digital contents provided by embodiment 1 of the present invention;
Fig. 3 is a schematic view illustrating the overall flow of a method for securely sharing digital contents provided by embodiment 2 of the present invention;
Fig. 4 is a schematic view illustrating the flow of a method that a user B recommends a user C to share the contents to a user A in embodiment 2 of the present invention;
Fig. 5 is a schematic view illustrating the overall flow of a method for securely sharing digital contents provided by embodiment 3 of the present invention;
Fig. 6 is a schematic view illustrating the flow of a method that a user A and a user B add each other as contacts provided by embodiment 3 of the present invention;
Fig. 7 is a schematic view illustrating the flow of a method that a user A sets a user C as a contact provided by embodiment 3 of the present invention;
Fig. 8 is a schematic structure diagram of a system for securely sharing digital contents provided by an embodiment of the present invention;
Fig. 9 is a schematic structure diagram of a device for securely sharing digital contents provided by the first embodiment of the device of the present invention;
Fig. 10 is a schematic structure diagram of a device for securely sharing digital contents provided by the second embodiment of the device of the present invention; and
Fig. 11 is a schematic structure diagram of a device for securely sharing digital contents provided by the third embodiment of the device of the present invention.

### Detailed Description of the Embodiments

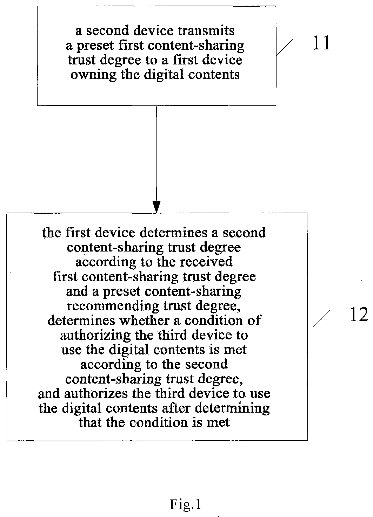

Embodiments of the present invention provide a method for securely sharing digital contents, in which, when determining other sharer (namely, a third device) recommended by a trusted sharer (namely, a second device) to be a trusted object, a user (namely, a first device) takes the other sharer as its sharing object, and transmits its digital contents to the other sharer. According to the method, a sharing range for the digital contents may be securely expanded, and the authorization from a third party is not needed during the process of adding the sharing object, thus avoiding the possibility of leaking the shared digital contents to the third party, and improving security and efficiency of sharing. As shown in Fig. 1, the specific process of the method comprises the steps as below.

Step 11, the second device transmits a preset first content-sharing trust degree to the first device owning the digital contents; the first content-sharing trust degree indicates a trust degree of the second device in the third device's being qualified to share the digital contents.

Step 12, the first device determines a second content-sharing trust degree according to the received first content-sharing trust degree and a preset content-sharing recommending trust degree, determines whether a condition of authorizing the third device to use the digital contents is met according to the second content-sharing trust degree, and authorizes the third device to use the digital contents after determining that the condition is met; the second content-sharing trust degree indicates a trust degree of the first device in the third device's being qualified to share the digital contents; and the content-sharing recommending trust degree indicates a trust degree of the first device in the second device's recommending the third device to share the digital contents.

Preferably, before step 11, the method further comprises: the first device transmits rights information to the second device; the rights information indicates that the first device allows the second device to recommend other digital content sharers to the first device; the step that the second device transmits the preset first content-sharing trust degree to the first device owning the digital contents comprises: the second device transmits the first content-sharing trust degree to the first device upon receipt of the rights information from the first device; and the content-sharing recommending trust degree indicates the trust degree of the first device in the second device's recommending a third device to be the digital content sharer.

Specifically, in step 12, the first device determines the second content-sharing trust degree according to the stored first content-sharing trust degree and the preset content-sharing recommending trust degree in accordance with a preset method.

Preferably, methods for determining the second content-sharing trust degree in accordance with the preset method include the following two methods as below.

The first method is that the first device determines the second content-sharing trust degree according to the preset content-sharing recommending trust degree and the first content-sharing trust degree in accordance with the preset method; for example, a product method may be used: if both the content-sharing recommending trust degree and the first content-sharing trust degree are 0.9, the second content-sharing trust degree is 0.81.

The second method is that the first device determines the trust level of the second content-sharing trust degree according to the trust level of the preset content-sharing recommending trust degree and the trust level of the received first content-sharing trust degree, and takes the determined trust level of the second content-sharing trust degree as the second content-sharing trust degree; for example, three trust levels, i.e. a trusted level, an uncertain level, a distrusted level are included; when both the trust level of the content-sharing recommending trust degree and the trust level of the received first content-sharing trust degree are the trusted level, the trust level of the second content-sharing trust degree is also the trusted level.

Specifically, in step 12, a method for determining whether the condition of transmitting the digital contents to the third device is met according to the second content-sharing trust degree comprises:
the first device determines that the second content-sharing trust degree meets the condition of authorizing the third device to use the digital contents when determining that the second content-sharing trust degree is above a preset trust degree threshold value.

Specifically, in step 12, a method for authorizing the third device to use the digital contents by the first device comprises:
the first device encrypts and packages the digital contents to be a digital content package in accordance with a preset method, creates an authorization license for the third device in accordance with a preset method, and transmits the packaged digital content package and the authorization license to the third device; the digital content package comprises a content identification of the digital contents which can be shared with the third device, a device identification of the device that owns the digital contents, and a content cyphertext of the digital contents; the authorization license comprises the content identification of the digital contents which can be shared by the third device, the device identification of the device that owns the digital contents, and a content key cyphertext bound with the identity of the third device; the content key cyphertext is used for obtaining a content key, and the encrypted content cyphertext is decrypted with the content key.

Specifically, a method for encrypting and packaging the digital contents to be a digital content package in accordance with a preset method by the first device comprises:
the first device encrypts the digital contents by using a pre-generated content key of the digital contents to obtain the content cyphertext, and packages the content cyphertext, the pre-generated content identification of the digital contents and the device identification of the first device to be the digital content package.

Specifically, a method for creating an authorization license for the third device in accordance with a preset method by the first device comprises:
the first device obtains a key parameter of the third device before creating the authorization license for the third device; the key parameter is generated by the third device according to its identification, and is unique in the system; the key parameter may be the public key of the device or a secret parameter used for generating a private secret key of the third device. In the present invention, the first device verifies the identity of the third device or carries out secure communication with the third device by virtue of the key parameter of the third device. In this step, methods for obtaining the key parameter of the third device include the following two methods as below.

The first method is that the first device directly obtains the key parameter of the third device from a trusted server which stores the key parameter of the third device.

The second method is that the second device transmits the key parameter of the third device to the first device when transmitting the first content-sharing trust degree to the first device and before the identity authentication of the third device needs to be performed.

If the second method is adopted, preferably, the first device determines whether the key parameter of the third device is trusted, that is, whether the key parameter assuredly belongs to the third device, upon receipt of the key parameter of the third device transmitted from the second device. A specific method may be as follows: the first device calculates a key-parameter trust degree of the first device in the third device according to its own stored key-parameter recommending trust degree and a key-parameter trust degree of the second device in the third device. When the key-parameter trust degree of the first device in the third device meets a preset condition, the first device stores the received key parameter of the third device transmitted from the second device; the key-parameter recommending trust degree is used for indicating a trust degree of the first device in the second device's recommending the key parameter of the third device, namely, a trust degree of the first device in the key parameter recommendation of the second device; the key-parameter trust degree of the second device in the third device is used for indicating a trust degree of the second device in the fact that the key parameter of the third device assuredly belongs to the third device; the key-parameter trust degree of the first device in the third device is used for indicating a trust degree of the first device in the fact that the claimed key parameter of the third device assuredly belongs to the third device; and the preset condition can be a trust degree threshold value.

After obtaining the key parameter of the third device, the first device encrypts the pre-generated content key by using the received key parameter so as to generate a content key cyphertext, and packages the content key cyphertext, the content identification of the digital contents allowed to be shared with the third device, and the device identification of the device that owns the digital contents allowed to be shared with the third device into the authorization license.

Preferably, after step 12, the method may further comprise:
the third device decrypts the content key cyphertext in the authorization license by using the secret key of the third device to obtain a content key, and decrypts the content cyphertext in the digital package by using the content key to obtain a content plaintext after determining that the content identification in the digital content package corresponds to the content identification in the authorization license, and that the device identification in the digital content package corresponds to the device identification in the authorization license.

Introduction is made below with specific embodiments.

It can be seen that according to the technical solution provided by the present invention, the first device may take another sharer, namely, the third device, as a sharing object for its own digital contents by accepting the recommendation of the trusted sharer, namely, the second device, thus realizing the expandable range of content sharers; moreover, in the present invention, the first device authorizes the third device only after determining that the third device meets a sharing condition according to the second content-sharing trust degree, thus ensuring the security of expanding the sharer range. In addition, in the present invention, the key parameter of the third device may be obtained from a trusted server or recommended by a device in a system, so that the present invention can be realized not only in a centralized architecture with a server but also in a peer-to-peer architecture without a server.

Introduction is made below with specific embodiments:

### Embodiment 1:

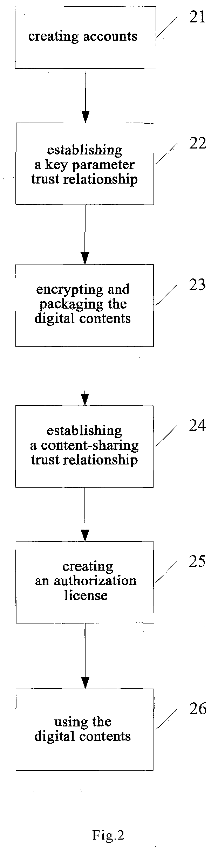

In order to facilitate introduction, digital rights management (DRM) software is taken as an example for introduction in this embodiment of the present invention, in this embodiment, users comprise a owner of digital contents, namely, the first device, a sharer of the digital contents, namely, the second device, and other sharers recommended to the first device by the second device and able to share the digital contents, namely, the third device; the owner, the sharer and the recommended sharer install the DRM software, respectively. The process of embodiment 1 is shown in Fig. 2, and the specific process is as follows.

At step 21, an account is created, and the step specifically comprises:
a user sets a unique user identification, namely, a device identification by virtue of the DRM software.

Here, the user identification may be information such as an identity card number, an email address, a mobile phone number or the like.

Preferably, in this step, secret key information of the user and a public key parameter may also be created; the key parameter corresponds to the user identification and is used for identity authentication and secure communication.

At step 22, a key parameter trust relationship is established, and this step may be realized by the two methods as below.

In method 1, the first device obtains the key parameters of the second device and the third device from a trusted server (for example, a certificate authority), respectively.

In this method, the second device and the third device generate key parameters and upload the key parameters to a trusted server; the server stores the corresponding relationship between the user identifications and the key parameters, and provides inquiry and download service of the key parameters for other users.

In method 2, in the condition that no trusted server is involved, for a known user, the first device may directly obtain the key parameter of the known user; for an unknown user, the first device may obtain the key parameter of the unknown user by virtue of the recommendation of a trusted referrer. The specific process of the method comprises:
(1) establishing a direct key parameter trust relationship;
   the first device adds its trusted object (i.e., the second device) as a contact, stores the device identification and the key parameter of the second device at the same time, and sets a key-parameter trust degree and a key-parameter recommending trust degree for the second device;
   the key-parameter trust degree is used for indicating a trust degree of the first device in the fact that the claimed key parameter of the second device assuredly belongs to the second device;
   the key-parameter recommending trust degree is used for indicating a trust degree of the user in the second device's recommending the key parameter of the third device, namely, a trust degree of the user in key-parameter recommendations of the second device;
   the first device considers that the claimed key parameter of the second device assuredly belongs to the second device, namely, the key parameter of the second device is trusted, when a key parameter trust degree for the contact is higher than a preset trust degree threshold value;
   the trust degree threshold value is set by the user according to actual situations;
(2) establishing an indirect key parameter trust relationship;
   the second device, as a referrer, recommends the third device ,as a referral, to the user by issuing a key parameter recommending certificate;
   the key parameter recommending certificate includes the device identification of the referrer, the device identification of the referral, the key parameter of the referral, and the key parameter trust degree of the referrer in the referral;
   after the preset condition (which will be described in detail in the subsequent steps) is met, the user stores the device identification and the key parameter of the referral according to the recommendation of the referrer, so as to establish an indirect trust relationship with the referral. The key-parameter trust degree of the user in the referral may be calculated according to the key-parameter recommending trust degree of the user in the referrer, and the key-parameter trust degree of the referrer in the referral. When the key-parameter trust degree in the referral is higher than the preset trust degree threshold value, the recommended key parameter is considered to assuredly belong to the referral, that is, the key parameter of the referral is trusted.

At step 23, the digital contents are encrypted and packaged.

When the user serves as the first device owning the digital contents, the user generates a content key for the digital contents and a unique content identification of the digital contents by virtue of the DRM software, encrypts the digital contents with the content key so as to obtain the content cyphertext of the digital contents, and then packages its own device identification, content identification and the generated content cyphertext into a digital content package;

The digital content package may arrive at the devices where the second device and the third device are located by means of direct transmission, super distribution and the like.

At step 24, a content sharing trust relationship is established, and the step comprises the following sub-steps:
(1) establishing a direct content sharing trust relationship;
   the first device takes the second device with which the first device has the direct content sharing trust relationship as a sharer, and determines the content identification of the digital contents which can be used by the second device, a third content-sharing trust degree, and a content-sharing recommending trust degree;
   the content-sharing trust degree comprises a first content-sharing trust degree, a second content-sharing trust degree and the third content-sharing trust degree; the first content-sharing trust degree indicates a trust degree of the second device in the third device's being is qualified to share the digital contents; the second content-sharing trust degree indicates a trust degree of the first device in the third device's being qualified to share the digital contents; the third content-sharing trust degree indicates a trust degree of the first device in the second device's securely sharing the digital contents; and the content-sharing recommending trust degree indicates a trust degree of the first device in the second device's recommending the third device to share the digital contents;
   the content identification may be preset by the first device owning the digital contents according to actual needs;
(2) establishing an indirect content sharing trust relationship, namely, establishing a content sharing trust relationship between the first device and the third device;
   the second device, as a referrer, may issue a sharing recommending certificate for the third device with which the second device has the content sharing trust relationship by virtue of the DRM software;
   the sharing recommending certificate comprises the device identification of the referrer, the device identification of the referral, the device identification of the first device, the content identification of the digital contents which can be shared by the referral, and the content-sharing trust degree of the referrer in the referral, wherein the content identification of the digital contents which can be shared by the referral should be the same as the content identification of the digital contents that the first device allows the second device to use. According to the recommendation of the referrer, the DRM software of the first device can calculate the indirect content-sharing trust degree of the first device in the referral according to the preset content-sharing recommending trust degree of the first device in the referral and the preset direct content-sharing trust degree of the referrer in the referral, so as to establish the indirect content sharing trust relationship between the first device and the referral.

At step 25, an authorization license is created;
The first device creates the authorization license for the second device or the third device by using the following method after establishing the content sharing trust relationship with the second device or the third device, and description is made by taking the second device as an example:
the first device determines whether the third content-sharing trust degree in the second device is higher than the trust degree threshold value, if yes, the first device considers the second device to be a qualified content sharer, then authorizes the second device, and allows the second device to use the corresponding digital contents. The first device encrypts the content key generated in step 23 according to the key parameter of the second device so as to generate a content key cyphertext after obtaining the key parameter of the second device in step 22, then extracts the content identification of the digital contents that the first device trusts the second device to use and is set in step 24, sets rights information, and finally packages the first device identification, the content identification, the content key cyphertext and the rights information into the authorization license, and transmits the authorization license to the second device;
the right information indicates that the first device allows the second device to recommend the other digital content sharer to the first device, and further includes a permission allowing the second device to use the digital contents, which is set by the first device, and only when the second device is allowed by the first device to recommend, the DRM software of the second device can perform content sharing recommending according to the second step in step 24.

At step 26, the digital contents are used.

The second device or the third device may use the digital contents by using the following method after obtaining the authorization license. Description is made below by taking the third device as an example.

After the third device receives the digital content package and the authorization license, the DRM software of the third device firstly verifies whether the device identification of the first device and the content identification in the digital content package are the same as the identification of the first device and the content identification of the digital contents that the first device allows the third device to use in the authorization license, if yes, the content key cyphertext is extracted from the authorization license, a private secret key is created according to the secret key information preset by the third device, and then the content key cyphertext is decrypted to obtain the content key. Then the content cyphertext in the digital content package is decrypted by using the content key to obtain a content plaintext, and finally the contents are presented according to the digital contents that the right information in the authorization license allows the third device to share.

A mode that the first device obtains the device identification and the key parameter of the second device in this embodiment may also comprise a mode that the first device initiatively asks for the device identification and the key parameter from the second device or a mode that the second device initiatively submits the device identification and the key parameter to the first device; likewise, a mode that the second device obtains the device identification and the key parameter of the third device in the embodiment is similar.

In this embodiment, the first device may initiatively add the third device as a contact, or add the third device as a contact after the third device is recommended to the first device by the second device;

In this embodiment, step 22 may be performed at any time after step 21 and before step 25; and there is no necessary order between step 23 and step 24.

### Embodiment 2:

This embodiment is the specific embodiment of embodiment 1, and adopts the first method of step 22 in embodiment 1. The embodiment is proposed with respect to an application scenario of securely sharing a secret file among working partners, and uses a public key cryptography algorithm, a symmetric cryptography algorithm and a trust evaluation algorithm in the prior art. In this embodiment, the key parameter disclosed by a user is the public key of the user, and the secret key information is the private key of the user. In order to facilitate explanation, in this embodiment, the trust degree is expressed by a real number within a closed interval from 0 to 1, the bigger the value is, the higher the trust degree is, 1 indicates complete trust, 0 indicates complete distrust, and according to an existing trust evaluation algorithm, a content-sharing trust degree of a content owner in a referral is the product of a content-sharing recommending trust degree of a content owner in a referrer and a direct content-sharing trust degree of the referrer in the referral.

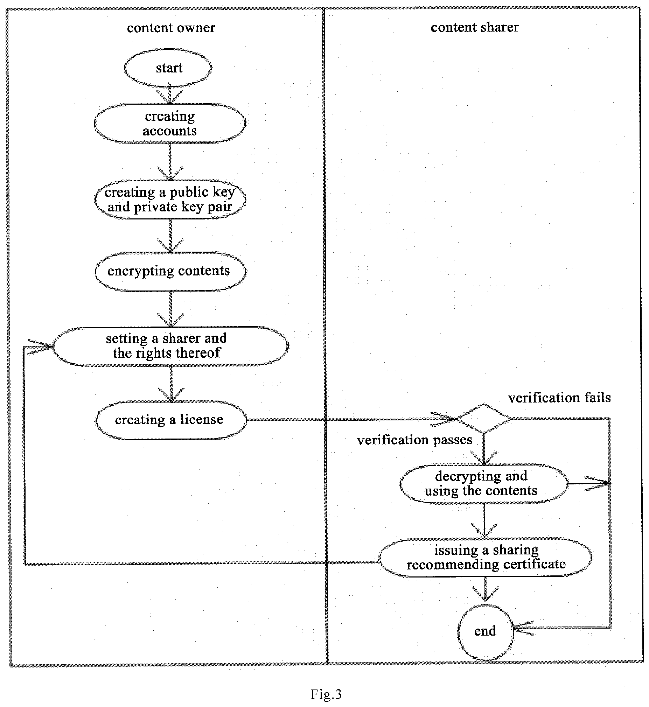

Suppose that a company W and a company V carry out business cooperation, a contact taking charge of cooperation affairs in the company W is A, a contact taking charge of cooperation affairs in the company V is B, and the assistant of B is C. A and B usually exchange files to discuss official business via emails. A direct trust relationship exists between A and B and between B and C, however, a trust relationship has not been established between A and C yet. Secure DRM software is installed for all of A, B and C. As shown in Fig. 3, the general process of the embodiment is as follows:
when contents need to be securely shared, A encrypts and packages the digital contents, sets B as a sharer, issues an authorization license for B, and allows B to recommend the received digital contents to another sharer; if B considers that the contents may also be shared with and used by C, B recommends C to A, and creates a sharing recommending certificate for C, then A adds C as a sharer, and issues an authorization license for C according to the sharing recommending certificate of B, so that C may also share and use the digital contents.

Suppose that the default value of a trust degree threshold value set in the DRM software is 0.6 presently.

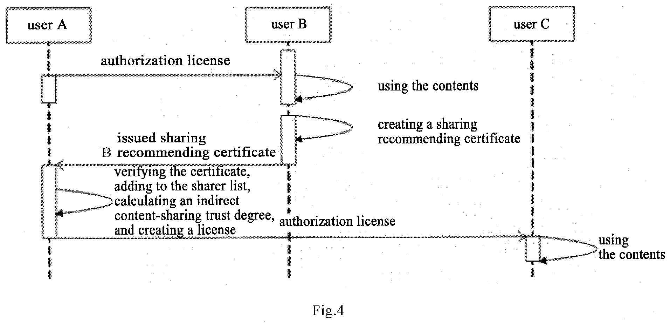

The specific steps of embodiment 2 are as follows:
(1) A, B and C create respective accounts by using the DRM software, respectively: A, B and C take email addresses as their own user identifications, namely, device identifications, respectively.
(2) A, B and C generate RSA (Rivest-Shamir-Adleman) public key and private key pairs bound with their own device identifications by using the DRM software, respectively, and securely store the RSA public key and private key pairs on private U (USB (universal serial bus)) keys, then upload their own user identifications and the public keys to a public key certificate authority (CA), and the CA stores and discloses the device identification and the public key of each user.
   A makes a request to the CA according to the device identification of B or C, inquires and downloads the public key of B or C, and adds B or C in a contact list when interacting with B or C to realize secure content sharing for the first time.
(3) A creates a digital content package.
   A randomly generates a content key and a unique content identification for a file content which needs to be protected by using the DRM software, encrypts the file content with the content key to obtain the cyphertext of the file contents, and then packages its own user identification, the created content identification, the generated content cyphertext, and a signature for the above information abstract into a digital content package. The digital content package may be transmitted to B and C by means of email or FTP (file transfer protocol) downloading or the like.
(4) A sets B as a content sharer.
   In order to guarantee that the partner B can decrypt the cyphertext in the digital content package so as to use the file, A adds B to a sharer list, information included in the sharer list comprises the user identification of B and the content identification of the contents which can be shared with B. A further sets a content-sharing recommending trust degree in B to be 0.9.
(5) A creates an authorization license for B.
   The DRM software of A inquires the public key of B from CA by using the method in step (2), or extracts the stored public key of B from the contact list, then encrypts the content key by using the public key of B to generate a content key cyphertext, and sets the rights of B to be readable, writable and sharing recommendable (because the sharing recommending trust degree is higher than the threshold value, the right information comprises sharing recommendable), finally packages the user identification of A, the content identification, the content key cyphertext, the right information, and the signature of A for the above information abstract into the authorization license, and transmits the authorization license to B.
(6) B uses the digital contents.
   Upon receipt of the digital content package and the authorization license, the DRM software of B verifies the signature of the content owner in the digital content package and the authorization license at first. If the verification is passed, the DRM software of B verifies whether the user identification and the content identification in the digital content package are the same as the user identification and the content identification in the authorization license, respectively. If yes, the content key cyphertext is extracted from the authorization license. Then B is required to plug the U key, and the private key of B is extracted from the U key. The DRM software of B decrypts the content key cyphertext by using the private key of B to obtain a content key, then decrypts the content cyphertext in the digital content package by using the content key to obtain a content plaintext, and finally presents the digital contents according to the rights in the authorization license.
(7) B recommends C to share the contents, as shown in Fig. 4.
   Because B is about to be on a business trip and cannot deal with the contents of a file transmitted from A in real time, his/her assistant C needs to take over the file. B sets and stores a direct content-sharing trust degree in C's using the shared file to be 0.9 according to acquaintance for C. Because the right information "sharing recommendable" in the authorization license obtained by B indicates that B is allowed to recommend a new sharer to participate in sharing of the digital contents, B, as a referrer, may issue a sharing recommending certificate for C through the DRM software. The sharing recommending certificate comprises the user identification of B, the user identification of C, the content identification of the digital contents which B recommends C to use, the direct content-sharing trust degree of B in C's using the sharing contents (i.e. 0.9), and the signature of B for the above information abstract. Upon receipt of the sharing recommending certificate issued by B, the DRM software of A verifies the signature of B at first, and after the verification is passed, the DRM software of A calculates the product of the direct content-sharing trust degree of B in C (i.e. 0.9) and a content-sharing recommending trust degree of A in B (i.e. 0.9) which is set in A's own sharer list, to obtain 0.81, which is taken as an indirect content-sharing trust degree of A in C. Because the content-sharing trust degree of A in C (i.e. 0.81) is higher than the trust degree threshold value of 0.6, A sets C as a legal sharer, and stores the user identification of C, the content identification of the contents shared with C, and the indirect content-sharing trust degree of A in C (i.e. 0.81) in the sharer list, and the content-sharing recommending trust degree of A in C is a default value of 0.

Referring to step (5), A issues the authorization license for C after obtaining the public key of C. C may use the digital contents recommended to be shared by referring to step (6) and help B deal with the file after obtaining the authorization license.

### Embodiment 3:

Embodiment 3 is also a specific embodiment of embodiment 1 and adopts the method 2 in step 22 of embodiment 1. The embodiment is proposed with respect to an application scenario of securely sharing private information among relatives and friends, and different from embodiment 2, this embodiment only relates to the symmetric cryptography algorithm, and a symmetric session key among the users is generated by using a Diffie-Hellman key agreement mechanism. In this embodiment, trust degree is expressed by three preset trust levels which are a trusted level, namely, credible, an uncertain level and a distrusted level, namely, incredible, ordering from high level to low level. The default trust threshold value of the system is the uncertain level, which indicates that only when a content-sharing trust degree of a content owner in a sharer is the trusted level, the content owner considers the sharer to be qualified to obtain an authorization to use the digital contents.

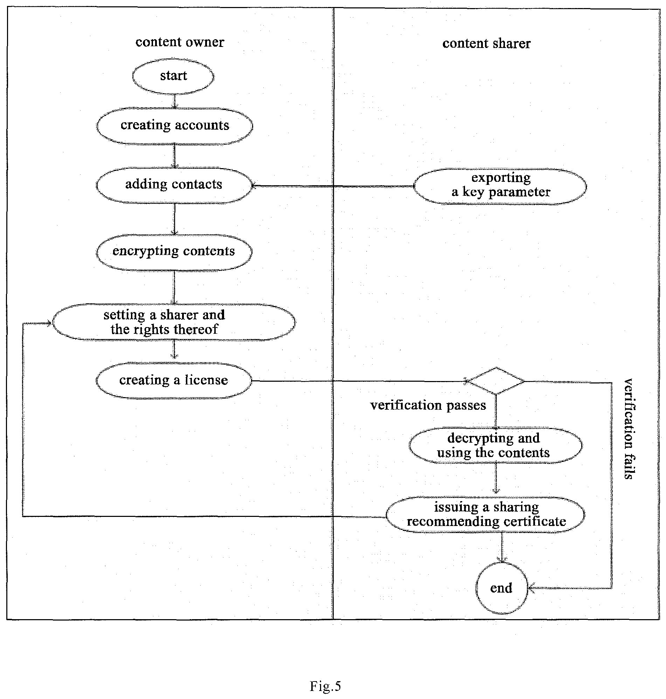

Suppose that A, B and C know each other, A and B are friends, and C is a family member of B. Secure DRM software is installed for all of A, B and C. As shown in Fig. 5, the overall process of this embodiment is as follows: A, B and C create respective accounts in their own DRM software, respectively, and A adds B and C as contacts after obtaining the public key parameters of B and C. When the digital contents need to be securely shared, A encrypts and packages the digital contents, sets B as a sharer, issues an authorization license for B, and allows B to recommend another sharer. Further, B recommends C to share the contents, and creates a sharing recommending certificate for C. A adds C as a sharer, and issues an authorization license for C according to the sharing recommending certificate from B, so that C may also share and use the digital contents. The key parameter corresponds to the user identification, and is used for identity authentication and secure communication.

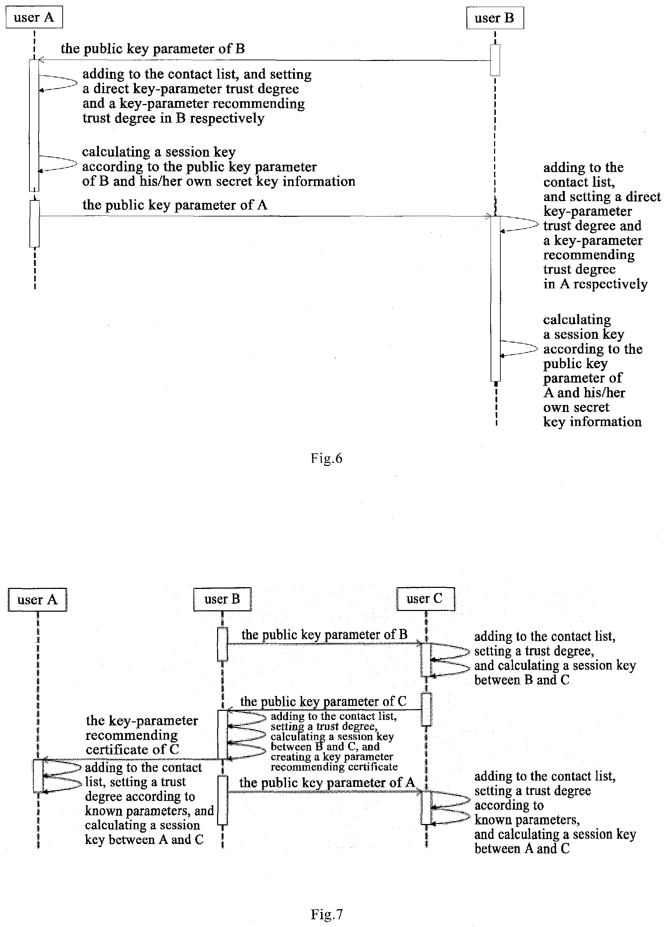

The specific steps of this embodiment are as follows:
(1) A, B and C create accounts respectively.
   A, B and C respectively take an email address as the user identifications of their own accounts, and create a pair of values, wherein one of the values is a public key parameter, and the other one is the secret key information of the user. Taking A as an example, A randomly creates an integer XA less than q by using the DRM software, and takes the value of a^{XA} mod q as YA. YA is the public key parameter, and XA is the private secret key information of A. Likewise, B and C set secret parameters XB and XC less than q by using the same process, respectively, and calculate YB and YC, respectively, wherein YB is equal to the value of a^{XB} mod q, YC is equal to the value of a^{XC} mod q, and a and q are system parameters.
(2) A obtains the public key parameters of B and C, and adds B and C as contacts respectively:
   (2.1) A and B add each other as contacts: as shown in Fig. 6, B exports his/her own user identification and the key parameter YB by using the DRM software, and transmits the user identification and the key parameter to A in a secure manner, the secure manner may comprise, for example, a mode that A directly copies the user identification of B and YB, or a mode that B transmits his/her own user identification and YB to A by email, and A may verify information by talking to B on the phone to prevent the information from being tampered. In this step, B can transmit his/her own user identification and YB to A upon receipt of the request from A or initiatively; and A imports the user identification of B and YB into the contact list by virtue of the DRM software. Likewise, B also adds A as a contact, and stores the user identification of A and YA. A and B may calculate a same session key KAB in the respective DRM software for carrying out secure communication in the future after adding each other as contacts. At the client of A, KAB is obtained by calculating YB^{XA} mod q; and at the client of B, KAB is obtained by calculating YA^{XB} mod q.
   (2.2) A and C add each other as contacts:
      The specific process is the same as (2.1). A and C may respectively calculate a same session key KAC on their respective clients for carrying out secure communication therebetween in the future after adding each other as contacts. At the client of A, KAC is obtained by calculating YC^{XA} mod q; and at the client of C, KAC is obtained by calculating YA^{XC} mod q.

   Specifically, the contacts may be added in the following manner: as shown in Fig. 7, after B and C mutually adds each other as contacts, B owns the public key parameter YC of C, and a direct key-parameter trust degree of B in C is the trusted level. B issues a key parameter recommending certificate for C, and transmits the key parameter recommending certificate to A, wherein the key parameter recommending certificate comprises the user identification of C, YC, the user identification of B, the direct key parameter trust degree of B in C, and the abstract cyphertext generated by encrypting the abstract value of the above information with KAB by B. After obtaining the key parameter recommending certificate of B, the DRM software of A decrypts the abstract cyphertext with KAB to obtain an abstract plaintext, and compares the abstract plaintext with an actual abstract value to carry out verification. If the verification is successful, the DRM software of A extracts the user identification of C and YC from the certificate, and adds C to the contact list. Because the key parameter recommending trust degree of A in B is the trusted level, and the key parameter trust degree of B in C is also the trusted level, the indirect key parameter trust degree of A in C is the trusted level. Likewise, C may also obtain the user identification of A and YA through B, adds A as a contact, and sets both an indirect key parameter trust degree in A and a key parameter recommending trust degree in A to be the trusted level.
   A and C may calculate a same session key KAC on their respective clients for carrying out secure communication therebetween in the future after adding each other as the contacts. At the client of A, KAC is obtained by calculating YC^{XA} mod q; and at the client of C, the KAC is obtained by calculating YA^{XC} mod q.
(3) A creates a digital content package:
   A randomly generates a content key and a unique content identification for private contents which need to be protected by using the DRM software, encrypts the file content with the content key to obtain the content cyphertext of the file contents, then packages his/her own user identification, the created content identification, and the generated content cyphertext into the digital content package. The digital content package may be transmitted to B and C by means of email or FTP downloading or the like.
(4) A sets B as a content sharer:
   In order to guarantee that the partner B can decrypt the cyphertext in the digital content package so as to use the private contents, A selects B in the contact list, and adds B into a sharer list, information included in the sharer list comprises the user identification of B and the content identification of the contents which can be shared with B, A further sets the content-sharing recommending trust degree in B to be the trusted level, namely, A allows B to recommend the contents to other users to share.
(5) A creates an authorization license for B:
   The DRM software of A encrypts the content key with KAB to generate a content key cyphertext which can be decrypted by B, and sets the permission of B to be readable and recommendable, and packages his/her own user identification, the content identification, the content key cyphertext, the rights information, and the abstract cyphertext generated by encrypting the abstract of above information with KAB into the authorization license, and transmits the authorization license to B.
(6) B uses the digital contents:
   Upon receipt of the digital content package and the authorization license, the DRM software of B abstracts the information of the license, decrypts the abstract cyphertext in the license with KAB, and determines whether the abstract generated by himself is the same as the abstract recovered by decrypting through comparison, so as to carry out verification. If the verification is successful, the DRM software of B verifies whether the user identification of the content owner and the content identification in the digital content package are the same as the identification of the content owner and the content identification in the authorization license, respectively, and if yes, the DRM software of B extracts the content key cyphertext from the authorization license, decrypts the content key cyphertext with KAB to obtain a content key, further decrypts a content cyphertext in the digital content package by using the content key to obtain a content plaintext, and finally uses the digital contents according to the rights in the authorization license.
(7) B recommends C to share the contents, as shown in Fig. 4:
   B hopes that his/her own family member C can also use the contents provided by A. Because the rights information in the authorization license obtained by B indicates that B is allowed to recommend new sharers to participate in sharing of the digital contents, B may issue a sharing recommending certificate for C through the DRM software as a referrer. The sharing recommending certificate comprises the user identification of B, the user identification of C, the content identification and the user identification of the digital contents that B recommends C to use, the direct content-sharing trust degree (being the trusted level) of B in that C uses the shared contents, and the abstract cyphertext generated by encrypting the abstract of the above information with KAB. Upon receipt of the sharing recommending certificate issued by B, the DRM software of A abstracts the information of the license, decrypts the abstract cyphertext in the license with KAB, and determines whether the abstract generated by herself is the same as the abstract recovered by decrypting through comparison, so as to carry out verification, and if the verification is successful, the DRM software of A obtains that the indirect content-sharing trust degree of A in C is the trusted level according to the fact that the direct content-sharing trust degree of B in C is the trusted level, and a content-sharing recommending trust degree of A in B set in his/her own sharer list is the trusted level. Because the content-sharing trust degree of A in C is higher than the trust degree threshold value, A sets C as a legal sharer, and stores the user identification of C, the content identification of the contents shared with C, and the indirect content-sharing trust degree of A in C in the sharer list. The content-sharing recommending trust degree of A in C is a default value which is the distrusted level.

Referring to step (5), A encrypts the content key with KAC to generate a content key cyphertext which can be decrypted by C, and issues the authorization license for C. C may use the digital contents recommended to be shared by referring to step (6) after obtaining the authorization license.

In all of the embodiments aforementioned, a mode that the first device obtains the key parameter of the second device may comprise the mode that the first device obtains the key parameter of the second device from a server which stores the key parameter of the second device; likewise, a mode that the second device obtains the key parameter of the third device is similar; the digital content package and the authorization license are not necessarily directly transmitted to the third device from the first device, and may be forwarded through other device, for example, P2P transmission;

In all of the embodiments aforementioned, the first device is a first terminal or a first server; the second device is a second terminal or a second server; and the third device is a third terminal or a third server.

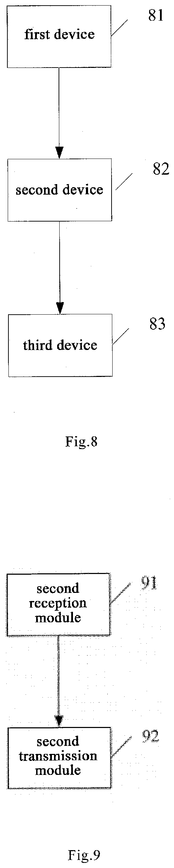

As shown in Fig. 8, the embodiment of the present invention provides a system for securely sharing the digital contents, comprising:
a second device 82 for transmitting a preset first content-sharing trust degree to a first device 81 with the digital contents, the first content-sharing trust degree indicating a trust degree of the second device 82 in determining that a third device 83 is qualified to share the digital contents;
the first device 81 for determining a second content-sharing trust degree according to the received first content-sharing trust degree and a preset content-sharing recommending trust degree, determining whether the condition of authorizing the third device 83 to use the digital contents is met according to the second content-sharing trust degree, and authorizing the third device 83 to use the digital contents after determining that the condition is met;
the third device 83 for using the digital contents according to the received digital content package and an authorization license;
wherein, the second content-sharing trust degree indicates a trust degree of the first device 81 in the third device 83's being qualified to share the digital contents; and the content-sharing recommending trust degree indicates a trust degree of the first device 81 in the second device 82's recommending the third device 83 to share the digital contents.

The third device 83 is used for:
decrypting the content key cyphertext in the authorization license by using the private secret key to obtain a content key, and decrypting a content cyphertext in the digital package by using the content key to obtain the content plaintext when determining that the content identification of the digital contents in the digital content package corresponds to the content identification of the digital contents in the authorization license, and that the device identification in the digital content package corresponds to the device identification in the authorization license.

The first embodiment of device:
As shown in Fig. 9, a device for securely sharing the digital contents, comprising:
a second reception module 91 for receiving rights information from the first device, and the rights information indicating that the first device allows the second device to recommend other digital content sharer to the first device; and
a second transmission module 92 for transmitting a preset first content-sharing trust degree upon receipt of the rights information, the first content-sharing trust degree indicating a trust degree of the second device in determining that the third device is qualified to share the digital contents.

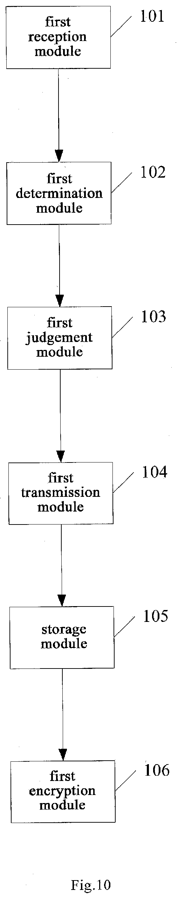

The second embodiment of device:
As shown in Fig. 10, a device for securely sharing the digital contents, comprising:
a first reception module 101 for receiving the first content-sharing trust degree;
a first determination module 102 for determining a second content-sharing trust degree according to the received first content-sharing trust degree and a preset content-sharing recommending trust degree by using a preset method;
a first judgement module 103 for judging whether the second content-sharing trust degree meets the condition of authorizing the third device to use the digital contents; and
a first transmission module 104 for authorizing the third device to use the digital contents after judging that the second content-sharing trust degree meets the condition of authorizing the third device to use the digital contents;
wherein, the second content-sharing trust degree indicates a trust degree of the first device in the third device's being qualified to share the digital contents; and the content-sharing recommending trust degree indicates a trust degree of the first device in the second device's recommending the third device to share the digital contents.

The first transmission module 104 is further used for:
transmitting the rights information to the second device after determining that the preset content-sharing recommending trust degree is larger than the preset trust degree threshold value; the rights information indicating that the first device allows the second device to recommend other digital content sharer to the first device; and the third content-sharing trust degree indicating a trust degree of the first device in determining that the second device is qualified to share the digital contents.

The first device further comprises:
a storage module 105 for storing the received first content-sharing trust degree;
the first determination module 102 for calculating the preset content-sharing recommending trust degree and the first content-sharing trust degree according to a trust evaluation algorithm, and determining the second content-sharing trust degree according to the calculation result; or, for setting rules, determining the trust level of the second content-sharing trust degree according to the trust level to which the preset content-sharing recommending trust degree belongs and the trust level to which the received first content-sharing trust degree belongs, and taking the determined trust level of the second content-sharing trust degree as the second content-sharing trust degree.

The first determination module 102 is further used for:
determining that the second content-sharing trust degree meets the condition of authorizing the third device to use the digital contents when determining that the second content-sharing trust degree is larger than the preset trust degree threshold value.

The first device further comprises:
a first encryption module 106 for encrypting the digital contents which may be shared with the third device by using the content key of the pre-generated content key of the digital contents to obtain a content cyphertext, and packaging the content cyphertext, the content identification of the digital contents and the device identification of the device into a digital content package.

The first transmission module 104 is further used for transmitting the packaged digital content package and the authorization license to the third device; the digital content package comprises the content identification of the digital contents which may be shared with the third device, the device identification of the device to which the digital contents belong, and the content cyphertext of the digital contents; the authorization license comprises the content identification of the digital contents which may be shared with the third device, the device identification of the device to which the digital contents belong, and the content key cyphertext of the digital contents which may be shared with the third device.

The first encryption module 106 is further used for:
encrypting the digital contents to obtain a content cyphertext by using pre-generated the content key of the digital contents, and packaging the content cyphertext, the pre-generated content identification of the digital contents and the device identification of the device into a digital content package.

The first reception module 101 is further used for:
receiving the key parameter of the third device; wherein the key parameter corresponds to a user identification of content users on the third device, and is used for identity authentication and secure communication.

The first encryption module 106 is further used for encrypting the pre-generated content key by using the received key parameter to generate a content key cyphertext, and packaging the content key cyphertext, the content identification of the digital contents allowed to be shared with other device, and the device identification of the device to which the digital contents allowed to be shared with the other device belongs into the authorization license.

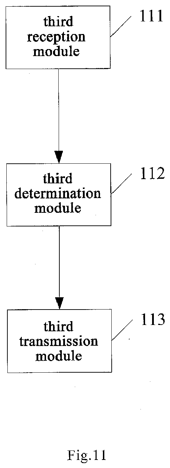

The third embodiment of device:
As shown in Fig. 11, a device for securely sharing the digital contents, comprising:
a third reception module 111 for receiving the digital content package and the authorization license transmitted from the first device;
a third determination module 112 for decrypting the content key cyphertext in the authorization license by using the pre-created secret key information to obtain a content key, and decrypting a content cyphertext in the digital package by using the content key to obtain a content plaintext when determining that the content identification in the digital content package corresponds to the content identification in the authorization license, and that the device identification in the digital content package corresponds to the device identification in the authorization license; and
a third transmission module 113 for transmitting the preset key parameter to the second device or a trusted server, wherein the key parameter corresponds to a user identification of content users on the third device, and is used for identity authentication and secure communication.

In the system and all of the devices for securely sharing the digital contents aforementioned, the first device is a first terminal or a first server; the second device is a second terminal or a second server; and the third device is a third terminal or a third server.

In conclusion, the present invention has following beneficial effects:
it can be seen that according to the technical solution provided by the present invention, the first device may take the other sharer, namely, the third device as a sharing object of its digital contents by accepting the recommendation of a trusted sharer, namely, the second device, therefore, the need of expanding the sharing range of the digital contents may be met; moreover, in the present invention, the first device authorizes the third device only after determining that the third device meets a sharing condition according to the second sharing trust degree, thus guaranteeing the security of expanding the range of the sharers; the first device transmits the encrypted digital content package including the digital contents and the created authorization certificate to the third device directly or by means of super distribution. The third device verifies the contents in the authorization certificate and the digital content package upon receipt of the digital content package and the authorization certificate, and the third device can decrypt the digital content package and obtain the needed digital contents from the digital content package only after the verification is passed. Therefore, the method is capable of greatly ensuring security during spreading and use of digital contents. In addition, the key parameter of the third device in the present invention may be obtained from a trusted server or recommended by a user in the system, so that the present invention can be realized in a centralized architecture with a server or realized in a peer-to-peer architecture without a server.

The person skilled in the art should understand that the embodiments of the present invention may be provided as a method, a system or a computer program product. Therefore, the present invention may be in the form of a complete hardware embodiment, a complete software embodiment or an embodiment combining software with hardware. Moreover, the present invention may be in the form of a computer program product implemented on one or more computer available storage mediums (including but not limited to magnetic disk storage, CD-ROM (Compact Disc-Read Only Memory), optical storage and the like) containing computer available program codes.

The present invention is described with reference to the flow diagrams and/or the block diagrams of the method, the device (system) and the computer program product according to the embodiments of the present invention. It can be understood that each process and/or block in the flow diagram and/or the block diagram, and the combination of the processes and/or blocks in the flow diagram and/or the block diagram may be implemented by computer program instructions. The computer program instructions may be provided to a universal computer, a special purpose computer, an embedded processor or the processors of other programmable data processing devices to generate a machine, so that the instructions executed by the computer or the processors of other programmable data processing devices generate a device used for implementing functions specified in one or more processes of the flow diagram and/or one or more blocks in the block diagram.

The computer program instructions may also be stored in a computer readable memory capable of guiding the computer or the other programmable data processing devices to work in a specific manner, so that the instructions stored in the computer readable storage generate manufactured products including an instruction device, and the instruction device is used for implementing the functions specified in one or more processes of the flow diagram and/or one or more blocks in the block diagram.

These computer program instructions may also be loaded on the computer or other programmable data processing devices, so that a series of operation steps are executed on the computer or the other programmable data processing devices to generate processing implemented by the computer, and then the instructions executed on the computer or the other programmable data processing devices provide a step for implementing functions specified in one or more processes of the flow diagram and/or one or more blocks in the block diagram.

Although the preferred embodiments of the present invention have been described, the person skilled in the art may make additional alterations and variations to the embodiments as long as knowing the basic creative concept. Therefore, the appended claims are intended to be interpreted as including the preferred embodiments and all alterations and variations falling into the scope of the present invention.

Obviously, various alterations and variations could be made to this application by the person skilled in the art without departing from the scope of the present invention. Thus, if these alterations and variations made to the present invention are within the scope of the claims of the present invention and equivalent technologies thereof, the present invention is intended to cover these alterations and variations.

## Claims

1. A method for securely sharing digital contents, comprising:
a second device transmitting a preset first content-sharing trust degree to a first device owning the digital contents; wherein the first content-sharing trust degree indicates a trust degree of the second device in a third device's being qualified to share the digital contents;
the first device determining a second content-sharing trust degree according to the received first content-sharing trust degree and a preset content-sharing recommending trust degree, determining whether a condition of authorizing the third device to use the digital contents is met according to the second content-sharing trust degree, and authorizing the third device to use the digital contents after determining that the condition is met;
wherein the second content-sharing trust degree indicates a trust degree of the first device in the third device's being qualified to share the digital contents; and the content-sharing recommending trust degree indicates a trust degree of the first device in the second device's recommending the third device to share the digital contents.

2. The method for securely sharing digital contents of claim 1, wherein before the second device transmitting the preset first content-sharing trust degree to the first device owning the digital contents, the method further comprises:
the first device transmitting rights information to the second device; wherein the rights information indicates that the first device allows the second device to recommend other sharers of the digital contents to the first device; and
the step of transmitting the preset first content-sharing trust degree to the first device owning the digital contents by the second device comprises:
the second device transmitting the first content-sharing trust degree to the first device after obtaining the rights information transmitted from the first device.

3. The method for securely sharing digital contents of claim 2, wherein before the first device transmitting the rights information to the second device, the method further comprises:
the first device determining that the preset content-sharing recommending trust degree is greater than a preset trust degree threshold value; wherein the content-sharing recommending trust degree indicates a trust degree of the first device in the second device's recommending the third device to be a sharer of the digital contents.

4. The method for securely sharing digital contents of claim 1, wherein the step of determining the second content-sharing trust degree comprises:
the first device calculating the preset content-sharing recommending trust degree and the first content-sharing trust degree according to a trust evaluation algorithm, and determining the second content-sharing trust degree according to the calculation result; or,
the first device setting a rule, determining the trust level of the second content-sharing trust degree according to the trust level of the preset content-sharing recommending trust degree and the trust level of the received first content-sharing trust degree, and taking the determined trust level of the second content-sharing trust degree as the second content-sharing trust degree.

5. The method for securely sharing digital contents of claim 4, wherein the step of determining whether the condition of authorizing the third device to use the digital contents is met according to the second content-sharing trust degree comprises:
the first device determining that the second content-sharing trust degree meets the condition of authorizing the third device to use the digital contents when determining that the second content-sharing trust degree is greater than the preset trust degree threshold value; or,
the first device determining that the second content-sharing trust degree meets the condition of authorizing the third device to use the digital contents when determining that the trust level of the second content-sharing trust degree is a trusted level.

6. The method for securely sharing digital contents of claim 1, wherein the step of authorizing the third device to use the digital contents by the first device comprises:
the first device creating and transmitting an authorization license for the third device; wherein the authorization license comprises a content identification of the digital contents which can be shared with the third device, a device identification of the device that owns the digital contents, and a content key cyphertext bound with the identity of the third device; and the content key cyphertext is used for enabling the third device to obtain a content key with which the encrypted content plaintext is decrypted.

7. The method for securely sharing digital contents of claim 6, wherein before the step of authorizing the third device to use the digital contents, the method further comprises:
the first device encrypting the digital contents which can be shared with the third device by using a pre-generated content key of the digital contents to obtain a content cyphertext, packaging the content cyphertext, the content identification of the digital contents, and the device identification of the first device into a digital content package, and transmitting the digital content package to the third device.

8. The method for securely sharing digital contents of claim 7, wherein after the step of authorizing the third device to use the digital contents by the first device, the method further comprises:
the third device decrypting the content key cyphertext in the authorization license by using a private secret key of the third device to obtain the content key, and decrypting the content cyphertext in the digital package by using the content key to obtain a content plaintext after determining that the content identification in the digital content package corresponds to the content identification in the authorization license, and that the device identification in the digital content package corresponds to the device identification in the authorization license.

9. The method for securely sharing digital contents of claim 6, wherein the first device obtains a key parameter of the third device before creating the authorization license for the third device; the key parameter corresponds to a user identification of content users on the third device, and is used for identity authentication and secure communication;
the step of creating the authorization license for the third device comprises by the first device:
the first device encrypting the pre-generated content key by using the received key parameter to generate the content key cyphertext, and packaging the content key cyphertext, the content identification of the digital contents allowed to be shared with the third device, and the device identification of the device that owns the digital contents allowed to be shared with the third device into the authorization license.

10. The method for securely sharing digital contents of claim 1, wherein the first device is a first terminal or a first server; the second device is a second terminal or a second server; and the third device is a third terminal or a third server.

11. A system for securely sharing digital contents, comprising:
a second device for transmitting a preset first content-sharing trust degree to a first device owning the digital contents, wherein the first content-sharing trust degree indicates a trust degree of the second device in a third device's being qualified to share the digital contents;
the first device for determining a second content-sharing trust degree according to the received first content-sharing trust degree and a preset content-sharing recommending trust degree, determining whether a condition of authorizing the third device to use the digital contents is met according to the second content-sharing trust degree, and authorizing the third device to use the digital contents after determining that the condition is met;
the third device for using the digital contents according to a received digital content package and authorization license;
wherein the second content-sharing trust degree indicates a trust degree of the first device in the third device's being qualified to share the digital contents; and the content-sharing recommending trust degree indicates a trust degree of the first device in the second device's recommending the third device to share the digital contents.

12. The system for securely sharing digital contents of claim 11, wherein the third device is used for:
decrypting a content key cyphertext in the authorization license by using a private secret key to obtain a content key, and decrypting a content cyphertext in the digital package by using the content key to obtain a content plaintext after determining that the content identification in the digital content package corresponds to the content identification in the authorization license, and that the device identification in the digital content package corresponds to the device identification in the authorization license.

13. A device for securely sharing digital contents, comprising:
a second reception module for receiving rights information from a first device, wherein the rights information indicates that the first device allows a second device to recommend other sharers of digital contents to the first device; and
a second transmission module for transmitting a preset first content-sharing trust degree upon receipt of the rights information, wherein the first content sharing trust degree indicates a trust degree of the second device in the third device's being qualified to share the digital contents.

14. A device for securely sharing digital contents, comprising:
a first reception module for receiving a first content-sharing trust degree;
a first determination module for determining a second content-sharing trust degree according to the received first content-sharing trust degree and a preset content-sharing recommending trust degree in accordance with a preset method;
a first judgement module for judging whether the second content-sharing trust degree meets a condition of authorizing a third device to use the digital contents; and
a first transmission module for authorizing the third device to use the digital contents after judging that the second content-sharing trust degree meets the condition of authorizing the third device to use the digital contents;
wherein the second content-sharing trust degree indicates a trust degree of the first device in the third device's being qualified to share the digital contents; and the content-sharing recommending trust degree indicates a trust degree of the first device in the second device's recommending the third device to share the digital contents.

## Patentansprüche

1. Verfahren zum sicheren gemeinsamen Nutzen digitaler Inhalte, umfassend:
das Übertragen eines voreingestellten ersten Vertrauensgrads für die gemeinsame Nutzung von Inhalten zu einer ersten Vorrichtung, welche Eigentümerin der digitalen Inhalte ist, durch eine zweite Vorrichtung; wobei der erste Vertrauensgrad für die gemeinsame Nutzung von Inhalten einen Vertrauensgrad der zweiten Vorrichtung in die Berechtigung einer dritten Vorrichtung, die digitalen Inhalte gemeinsam zu nutzen, anzeigt;
das Bestimmen, durch die erste Vorrichtung, eines zweiten Vertrauensgrads für die gemeinsame Nutzung von Inhalten gemäß dem empfangenen ersten Vertrauensgrad für die gemeinsame Nutzung von Inhalten und einem voreingestellten Empfehlungsvertrauensgrad für die gemeinsame Nutzung von Inhalten, das Bestimmen, ob eine Bedingung zum Berechtigen der dritten Vorrichtung, die digitalen Inhalte zu nutzen, gemäß dem zweiten Vertrauensgrad für die gemeinsame Nutzung von Inhalten erfüllt ist, und nach dem Bestimmen, dass die Bedingung erfüllt ist, das Berechtigen der dritten Vorrichtung, die digitalen Inhalte zu nutzen;
wobei der zweite Vertrauensgrad für die gemeinsame Nutzung von Inhalten einen Vertrauensgrad der ersten Vorrichtung in die Berechtigung der dritten Vorrichtung, die digitalen Inhalte gemeinsam zu nutzen, anzeigt; und der Empfehlungsvertrauensgrad für die gemeinsame Nutzung von Inhalten einen Vertrauensgrad der ersten Vorrichtung in die Empfehlung der dritten Vorrichtung, die digitalen Inhalte gemeinsam zu nutzen, durch die zweite Vorrichtung anzeigt.

2. Verfahren zum sicheren gemeinsamen Nutzen digitaler Inhalte nach Anspruch 1, wobei bevor die zweite Vorrichtung den voreingestellten ersten Vertrauensgrad für die gemeinsame Nutzung von Inhalten zur ersten Vorrichtung, welche Eigentümerin der digitalen Inhalte ist, überträgt, das Verfahren ferner umfasst:
das Übertragen von Rechteinformationen durch die erste Vorrichtung an die zweite Vorrichtung; wobei die Rechteinformationen anzeigen, dass die erste Vorrichtung der zweiten Vorrichtung erlaubt, der ersten Vorrichtung weitere gemeinsame Nutzer der digitalen Inhalte zu empfehlen; und
der Schritt des Übertragens des voreingestellten ersten Vertrauensgrads für die gemeinsame Nutzung von Inhalten durch die zweite Vorrichtung zur ersten Vorrichtung, welche Eigentümerin der digitalen Inhalte ist, umfasst:
das Übertragen des ersten Vertrauensgrads für die gemeinsame Nutzung von Inhalten durch die zweite Vorrichtung zur ersten Vorrichtung nach dem Erhalten der von der ersten Vorrichtung übertragenen Rechteinformationen.

3. Verfahren zum sicheren gemeinsamen Nutzen digitaler Inhalte nach Anspruch 2, wobei bevor die erste Vorrichtung die Rechteinformationen zur zweiten Vorrichtung überträgt, das Verfahren ferner umfasst:
das Bestimmen durch die erste Vorrichtung, dass der voreingestellte Empfehlungsvertrauensgrad für die gemeinsame Nutzung von Inhalten größer ist, als ein voreingestellter Vertrauensgrad-Schwellenwert; wobei der Empfehlungsvertrauensgrad für die gemeinsame Nutzung von Inhalten einen Vertrauensgrad der ersten Vorrichtung in die Empfehlung der dritten Vorrichtung als einen gemeinsamen Nutzer der digitalen Inhalte durch die zweite Vorrichtung anzeigt.

4. Verfahren zum sicheren gemeinsamen Nutzen digitaler Inhalte nach Anspruch 1, wobei der Schritt des Bestimmens des zweiten Vertrauensgrads zur Nutzung gemeinsamer Inhalte umfasst:
das Berechnen durch die erste Vorrichtung des voreingestellten Empfehlungsvertrauensgrads für die gemeinsame Nutzung von Inhalten und des ersten Vertrauensgrads für die gemeinsame Nutzung von Inhalten gemäß einem Vertrauensbeurteilungsalgorithmus, und das Bestimmen des zweiten Vertrauensgrads für die gemeinsame Nutzung von Inhalten gemäß dem Berechnungsergebnis; oder
das Festlegen einer Regel durch die erste Vorrichtung, welche das Vertrauensniveau des zweiten Vertrauensgrads für die gemeinsame Nutzung von Inhalten gemäß dem Vertrauensniveau des voreingestellten Empfehlungsvertrauensgrads für die gemeinsame Nutzung von Inhalten und dem Vertrauensniveau des empfangenen ersten Vertrauensgrads zur gemeinsamem Nutzung von Inhalten bestimmt, und das Verwenden des bestimmten Vertrauensniveaus des zweiten Vertrauensgrads für die gemeinsame Nutzung von Inhalten als den zweiten Vertrauensgrad für die gemeinsame Nutzung von Inhalten.

5. Verfahren zum sicheren gemeinsamen Nutzen digitaler Inhalte nach Anspruch 4, wobei der Schritt des Bestimmens, ob die Bedingung zum Berechtigen der dritten Vorrichtung, die digitalen Inhalte zu nutzen, gemäß dem zweiten Vertrauensgrad für die gemeinsame Nutzung von Inhalten erfüllt ist, umfasst:
das Bestimmen durch die erste Vorrichtung, dass der zweite Vertrauensgrad für die gemeinsame Nutzung von Inhalten die Bedingung zum Berechtigen der dritten Vorrichtung, die digitalen Inhalte zu nutzen, erfüllt, wenn bestimmt wird, dass der zweite Vertrauensgrad für die gemeinsame Nutzung von Inhalten größer ist, als der voreingestellte Vertrauensgrad für die gemeinsame Nutzung von Inhalten; oder
das Bestimmen durch die erste Vorrichtung, dass der zweite Vertrauensgrad für die gemeinsame Nutzung von Inhalten die Bedingung zum Berechtigen der dritten Vorrichtung, die digitalen Inhalte zu nutzen, erfüllt, wenn bestimmt wird, dass das Vertrauensniveau des zweiten Vertrauensgrads für die gemeinsame Nutzung von Inhalten ein zuverlässiges Niveau ist.

6. Verfahren zum sicheren gemeinsamen Nutzen digitaler Inhalte nach Anspruch 1, wobei der Schritt des Berechtigens der dritten Vorrichtung, die digitalen Inhalte zu nutzen, durch die erste Vorrichtung umfasst:
das Erstellen und Übertragen durch die erste Vorrichtung einer Berechtigungslizenz für die dritte Vorrichtung; wobei die Berechtigungslizenz eine Inhaltskennung der digitalen Inhalte, welche mit der dritten Vorrichtung gemeinsam genutzt werden können, eine Vorrichtungskennung der Vorrichtung, die Eigentümerin der digitalen Inhalte ist, und einen Inhaltsschlüsselchiffretext, der mit der Identität der dritten Vorrichtung verbunden ist, umfasst; und
der Inhaltsschlüsselchiffretext dazu verwendet wird, der dritten Vorrichtung zu ermöglichen, einen Inhaltsschlüssel zu erlangen, mit welchem der verschlüsselte Klartext entschlüsselt wird.

7. Verfahren zum sicheren gemeinsamen Nutzen digitaler Inhalte nach Anspruch 6, wobei das Verfahren vor dem Schritt des Berechtigens der dritten Vorrichtung, die digitalen Inhalte zu nutzen, ferner umfasst:
das Verschlüsseln der digitalen Inhalte, welche mit der dritten Vorrichtung gemeinsam genutzt werden können, durch die erste Vorrichtung unter Verwendung eines zuvor erzeugten Inhaltsschlüssels der digitalen Inhalte, um einen Inhaltschiffretext zu erhalten, das Packen des Inhaltschiffretexts, der Inhaltskennung der digitalen Inhalte und der Vorrichtungskennung der ersten Vorrichtung in ein digitales Inhaltspaket, und das Übertragen des digitalen Inhaltspakets an die dritte Vorrichtung.

8. Verfahren zum sicheren gemeinsamen Nutzen digitaler Inhalte nach Anspruch 7, wobei das Verfahren nach
dem Schritt des Berechtigens der dritten Vorrichtung, die digitalen Inhalte zu nutzen, durch die erste Vorrichtung ferner umfasst:
das Entschlüsseln des Inhaltsschlüsselchiffretexts in der Berechtigungslizenz durch die dritte Vorrichtung unter Verwendung eines privaten Geheimschlüssels der dritten Vorrichtung, um den Inhaltsschlüssel zu erlangen, und das Entschlüsseln des Inhaltschiffretexts im digitalen Paket unter Verwendung des Inhaltsschlüssels zum Erlangen eines Inhaltsklartexts, nachdem bestimmt worden ist, dass die Inhaltskennung im digitalen Inhaltspaket der Inhaltskennung in der Berechtigungslizenz entspricht, und dass die Vorrichtungskennung im digitalen Inhaltspaket der Vorrichtungskennung in der Berechtigungslizenz entspricht.

9. Verfahren zum sicheren gemeinsamen Nutzen digitaler Inhalte nach Anspruch 6, wobei die erste Vorrichtung einen Schlüsselparameter der dritten Vorrichtung erlangt, bevor sie die Berechtigungslizenz für die dritte Vorrichtung erstellt; wobei der Schlüsselparameter einer Benutzerkennung von Inhaltsbenutzern an der dritten Vorrichtung entspricht und zur Identitätsauthentifizierung und sicheren Kommunikation verwendet wird;
der Schritt des Erstellens der Berechtigungslizenz für die dritte Vorrichtung durch die erste Vorrichtung umfasst:
das Verschlüsseln durch die erste Vorrichtung des zuvor erzeugten Inhaltsschlüssels unter Verwendung des empfangenen Schlüsselparameters, um den Inhaltsschlüsselchiffretext zu erzeugen, und das Packen des Inhaltsschlüsselchiffretexts, der Inhaltskennung der digitalen Inhalte, welche mit der dritten Vorrichtung gemeinsam genutzt werden dürfen, und der Vorrichtungskennung der Vorrichtung, welche Eigentümerin der digitalen Inhalte, welche mit der dritten Vorrichtung gemeinsam genutzt werden dürfen, ist, in die Berechtigungslizenz.

10. Verfahren zum sicheren gemeinsamen Nutzen digitaler Inhalte nach Anspruch 1, wobei die erste Vorrichtung ein erstes Endgerät oder ein erster Server ist; die zweite Vorrichtung ein zweites Endgerät oder ein zweiter Server ist; und die dritte Vorrichtung ein drittes Endgerät oder ein dritter Server ist.

11. System zum sicheren gemeinsamen Nutzen digitaler Inhalte, umfassend:
eine zweite Vorrichtung zum Übertragen eines voreingestellten ersten Vertrauensgrads für die gemeinsame Nutzung von Inhalten zu einer ersten Vorrichtung, welche Eigentümerin der digitalen Inhalte ist, wobei der erste Vertrauensgrad für die gemeinsame Nutzung von Inhalten einen Vertrauensgrad der zweiten Vorrichtung in eine Berechtigung einer dritten Vorrichtung, die digitalen Inhalte gemeinsam zu nutzen, anzeigt;
die erste Vorrichtung zum Bestimmen eines zweiten Vertrauensgrad für die gemeinsame Nutzung von Inhalten gemäß dem empfangenen ersten Vertrauensgrad für die gemeinsame Nutzung von Inhalten und einem voreingestellten Empfehlungsvertrauensgrad für die gemeinsame Nutzung von Inhalten, zum Bestimmen, ob eine Bedingung, welche die dritte Vorrichtung
berechtigt, die digitalen Inhalte zu nutzen, gemäß dem zweiten Vertrauensgrad für die gemeinsame Nutzung von Inhalten erfüllt ist, und nach dem Bestimmen, dass die Bedingung erfüllt ist, zum Ermächtigen der dritten Vorrichtung, die digitalen Inhalte zu nutzen;
die dritte Vorrichtung zum Nutzen der digitalen Inhalte gemäß dem empfangenen digitalen Inhaltspaket und einer Berechtigungslizenz;
wobei der zweite Vertrauensgrad für die gemeinsame Nutzung von Inhalten einen Vertrauensgrad der ersten Vorrichtung in die Berechtigung der dritten Vorrichtung, die digitalen Inhalte gemeinsam zu nutzen, anzeigt; und der Empfehlungsvertrauensgrad für die gemeinsame Nutzung von Inhalten einen Vertrauensgrad der ersten Vorrichtung in die Empfehlung der dritten Vorrichtung, die digitalen Inhalte gemeinsam zu nutzen, durch die zweite Vorrichtung anzeigt.

12. System zum sicheren gemeinsamen Nutzen digitaler Inhalte nach Anspruch 11, wobei die dritte Vorrichtung dazu verwendet wird:
einen Inhaltsschlüsselchiffretexts in der Berechtigungslizenz unter Verwendung eines privaten Geheimschlüssels zu entschlüsseln, um einen Inhaltsschlüssel zu erlangen, und einen Inhaltschiffretexts im digitalen Paket unter Verwendung des Inhaltsschlüssels zu entschlüsseln, um einen Inhaltsklartexts zu erhalten, nachdem bestimmt worden ist, dass die Inhaltskennung im digitalen Inhaltspaket der Inhaltskennung in der Berechtigungslizenz entspricht, und dass die Vorrichtungskennung im digitalen Inhaltspaket der Vorrichtungskennung in der Berechtigungslizenz entspricht.

13. Vorrichtung zum sicheren gemeinsamen Nutzen digitaler Inhalte, umfassend:
ein zweites Empfangsmodul zum Empfangen von Rechteinformationen von einer ersten Vorrichtung, wobei die Rechteinformationen anzeigen, dass die erste Vorrichtung einer zweiten Vorrichtung erlaubt, der ersten Vorrichtung weitere gemeinsame Nutzer digitaler Inhalte zu empfehlen; und
ein zweites Übertragungsmodul zum Übertragen eines voreingestellten ersten Vertrauensgrads für die gemeinsame Nutzung von Inhalten beim Erhalt der Rechteinformationen, wobei der erste Vertrauensgrad für die gemeinsame Nutzung von Inhalten einen Vertrauensgrad der zweiten Vorrichtung in eine Berechtigung der dritten Vorrichtung, die digitalen Inhalte gemeinsam zu nutzen, anzeigt.

14. Vorrichtung zum sicheren gemeinsamen Nutzen digitaler Inhalte, umfassend:
ein erstes Empfangsmodul zum Empfangen eines ersten Vertrauensgrads für die gemeinsame Nutzung von Inhalten;
ein erstes Bestimmungsmodul zum Bestimmen eines zweiten Vertrauensgrads für die gemeinsame Nutzung von Inhalten gemäß dem empfangenen ersten Vertrauensgrad für die gemeinsame Nutzung von Inhalten und einem voreingestellten Empfehlungsvertrauensgrad für die gemeinsame Nutzung von Inhalten gemäß einem voreingestellten Verfahren;
ein erstes Beurteilungsmodul zum Beurteilen, ob der zweite Vertrauensgrad für die gemeinsame Nutzung von Inhalten eine Bedingung zum Berechtigen einer dritten Vorrichtung, die digitalen Inhalte zu nutzen, erfüllt; und
ein erstes Übertragungsmodul zum Berechtigen der dritten Vorrichtung, die digitalen Inhalte zu nutzen, nachdem beurteilt worden ist, dass der zweite Vertrauensgrad für die gemeinsame Nutzung von Inhalten die Bedingung zum Berechtigen der dritten Vorrichtung, die digitalen Inhalte zu nutzen, erfüllt;
wobei der zweite Vertrauensgrad für die gemeinsame Nutzung von Inhalten einen Vertrauensgrad der ersten Vorrichtung in die Berechtigung der dritten Vorrichtung, die digitalen Inhalte gemeinsam zu nutzen, anzeigt; und der Empfehlungsvertrauensgrad für die gemeinsame Nutzung von Inhalten einen Vertrauensgrad der ersten Vorrichtung in die Empfehlung der dritten Vorrichtung, die digitalen Inhalte gemeinsam zu nutzen, durch die zweite Vorrichtung anzeigt.

## Revendications

1. Procédé de partage sécurisé de contenus numériques, comprenant :
la transmission, par un deuxième dispositif, d'un premier degré de confiance de partage de contenu prédéfini à un premier dispositif possédant les contenus numériques ; dans lequel le premier degré de confiance de partage de contenu indique un degré de confiance du deuxième dispositif dans la qualification d'un troisième dispositif pour partager les contenus numériques ;
la détermination d'un second degré de confiance de partage de contenu selon le premier degré de confiance de partage de contenu reçu et d'un degré de confiance de recommandation de partage de contenu prédéfini, la détermination du fait qu'une condition pour autoriser le troisième dispositif à utiliser les contenus numériques est satisfaite selon le second degré de confiance de partage de contenu, et le fait d'autoriser le troisième dispositif à utiliser les contenus numériques après avoir déterminé que la condition est satisfaite, par le premier dispositif ;
dans lequel le second degré de confiance de partage de contenu indique un degré de confiance du premier dispositif dans la qualification du troisième dispositif pour partager les contenus numériques ; et le degré de confiance de recommandation de partage de contenu indique un degré de confiance du premier dispositif dans la recommandation par le deuxième dispositif du troisième dispositif pour partager les contenus numériques.

2. Procédé de partage sécurisé de contenus numériques selon la revendication 1, dans lequel avant que le deuxième dispositif transmette le premier degré de confiance de partage de contenu prédéfini au premier dispositif possédant les contenus numériques, le procédé comprend en outre :
la transmission, par le premier dispositif, d'informations de droits au deuxième dispositif ; dans lequel les informations de droits indiquent que le premier dispositif permet au deuxième dispositif de recommander d'autres dispositifs partageant les contenus numériques au premier dispositif ; et
l'étape de transmission du premier degré de confiance de partage de contenu prédéfini au premier dispositif possédant les contenus numériques par le deuxième dispositif comprend :
la transmission, par le deuxième dispositif, du premier degré de confiance de partage de contenu au premier dispositif après l'obtention des informations de droits transmises par le premier dispositif.

3. Procédé de partage sécurisé de contenus numériques selon la revendication 2, dans lequel avant que le premier dispositif transmette les informations de droits au deuxième dispositif, le procédé comprend en outre :
le fait de déterminer, par le premier dispositif, que le degré de confiance de recommandation de partage de contenu prédéfini est supérieur à une valeur de seuil de degré de confiance prédéfinie ; dans lequel le degré de confiance de recommandation de partage de contenu indique un degré de confiance du premier dispositif dans la recommandation par le deuxième dispositif que le troisième dispositif est un dispositif partageant les contenus numériques.

4. Procédé de partage sécurisé de contenus numériques selon la revendication 1, dans lequel l'étape de détermination du second degré de confiance de partage de contenu comprend :
le calcul du degré de confiance de recommandation de partage de contenu prédéfini et du premier degré de confiance de partage de contenu selon un algorithme d'évaluation de confiance, et la détermination du second degré de confiance de partage de contenu selon le résultat du calcul, par le premier dispositif ; ou,
la définition d'une règle déterminant le niveau de confiance du second degré de confiance de partage de contenu selon le niveau de confiance du degré de confiance de recommandation de partage de contenu prédéfini et le niveau de confiance du premier degré de confiance de partage de contenu reçu, et le fait de prendre le niveau de confiance déterminé du second degré de confiance de partage de contenu en tant que second degré de confiance de partage de contenu, par le premier dispositif.

5. Procédé de partage sécurisé de contenus numériques selon la revendication 4, dans lequel l'étape consistant à déterminer si la condition pour autoriser le troisième dispositif à utiliser les contenus numériques est satisfaite selon le second degré de confiance de partage de contenu comprend :
La détermination, par le premier dispositif, du fait que le second degré de confiance de partage de contenu satisfait la condition pour autoriser le troisième dispositif à utiliser les contenus numériques lorsqu'il est déterminé que le second degré de confiance de partage de contenu est supérieur à la valeur de seuil de degré de confiance prédéfinie ; ou,
La détermination, par le premier dispositif, du fait que le second degré de confiance de partage de contenu satisfait la condition pour autoriser le troisième dispositif à utiliser les contenus numériques lorsqu'il est déterminé que le niveau de confiance du second degré de confiance de partage de contenu est un niveau digne de confiance.

6. Procédé de partage sécurisé de contenus numériques selon la revendication 1, dans lequel l'étape consistant à autoriser le troisième dispositif à utiliser les contenus numériques par le premier dispositif comprend :
la création et la transmission, par le premier dispositif, d'une licence d'autorisation pour le troisième dispositif ; dans lequel la licence d'autorisation comprend une identification de contenu des contenus numériques qui peuvent être partagés avec le troisième dispositif, une identification de dispositif du dispositif qui possède les contenus numériques, et un cryptogramme de clé de contenu lié à l'identité du troisième dispositif ; et le cryptogramme de clé de contenu est utilisé pour permettre au troisième dispositif d'obtenir une clé de contenu avec laquelle le texte en clair du contenu chiffré est déchiffré.

7. Procédé de partage sécurisé de contenus numériques selon la revendication 6, dans lequel avant l'étape consistant à autoriser le troisième dispositif à utiliser les contenus numériques, le procédé comprend en outre :
le chiffrement des contenus numériques qui peuvent être partagés avec le troisième dispositif à l'aide d'une clé de contenu prégénérée des contenus numériques pour obtenir un cryptogramme de contenu, la mise en paquet du cryptogramme de contenu, de l'identification de contenu des contenus numériques et de l'identification de dispositif du premier dispositif dans un paquet de contenu numérique, et la transmission du paquet de contenu numérique au troisième dispositif, par le premier dispositif.

8. Procédé de partage sécurisé de contenus numériques selon la revendication 7, dans lequel après l'étape consistant à autoriser le troisième dispositif à utiliser les contenus numériques par le premier dispositif, le procédé comprend en outre :
le déchiffrement du cryptogramme de clé de contenu dans la licence d'autorisation à l'aide d'une clé secrète privée du troisième dispositif pour obtenir la clé de contenu, et le déchiffrement du cryptogramme de contenu dans le paquet numérique à l'aide de la clé de contenu, par le troisième dispositif, pour obtenir un texte en clair de contenu après qu'il a été déterminé que l'identification de contenu dans le paquet de contenu numérique correspond à l'identification de contenu dans la licence d'autorisation, et que l'identification de dispositif dans le paquet de contenu numérique correspond à l'identification de dispositif dans la licence d'autorisation.

9. Procédé de partage sécurisé de contenus numériques selon la revendication 6, dans lequel le premier dispositif obtient un paramètre de clé du troisième dispositif avant la création de la licence d'autorisation pour le troisième dispositif ; le paramètre de clé correspond à une identification d'utilisateur d'utilisateurs de contenu sur le troisième dispositif, et est utilisé pour une authentification d'identité et une communication sécurisée ;
l'étape de création de la licence d'autorisation pour le troisième dispositif comprend par le premier dispositif :
le chiffrement de la clé de contenu prégénérée à l'aide du paramètre de clé reçu pour générer le cryptogramme de clé de contenu, et l'empaquetage du cryptogramme de clé de contenu, de l'identification de contenu des contenus numériques autorisés à être partagés avec le troisième dispositif, et de l'identification de dispositif du dispositif qui possède les contenus numériques autorisés à être partagés avec le troisième dispositif dans la licence d'autorisation, par le premier dispositif.

10. Procédé de partage sécurisé de contenus numériques selon la revendication 1, dans lequel le premier dispositif est un premier terminal ou premier serveur ; le deuxième dispositif est un deuxième terminal ou un deuxième serveur ; et le troisième dispositif est un troisième terminal ou un troisième serveur.

11. Système pour le partage sécurisé de contenus numériques, comprenant :
un deuxième dispositif pour transmettre un premier degré de confiance de partage de contenu prédéfini à un premier dispositif possédant les contenus numériques, dans lequel le premier degré de confiance de partage de contenu indique un degré de confiance du deuxième dispositif dans une qualification du troisième dispositif pour partager les contenus numériques ;
le premier dispositif pour déterminer un second degré de confiance de partage de contenu selon le premier degré de confiance de partage de contenu reçu et un degré de confiance de recommandation de partage de contenu prédéfini, déterminer si une condition pour autoriser le troisième dispositif à utiliser les contenus numériques est satisfaite selon le second degré de confiance de partage de contenu, et autoriser le troisième dispositif à utiliser les contenus numériques après avoir déterminé que la condition est satisfaite ;
le troisième dispositif pour utiliser les contenus numériques selon un paquet de contenu numérique reçu et une licence d'autorisation ;
dans lequel le second degré de confiance de partage de contenu indique un degré de confiance du premier dispositif dans la qualification du troisième dispositif pour partager les contenus numériques ; et le degré de confiance de recommandation de partage de contenu indique un degré de confiance du premier dispositif dans la recommandation par le deuxième dispositif du troisième dispositif pour partager les contenus numériques.

12. Système de partage sécurisé de contenus numériques selon la revendication 11, dans lequel le troisième dispositif est utilisé pour :
déchiffrer un cryptogramme de clé de contenu dans la licence d'autorisation à l'aide d'une clé secrète privée pour obtenir une clé de contenu, et déchiffrer un cryptogramme de contenu dans le paquet numérique à l'aide de la clé de contenu pour obtenir un texte en clair de contenu après qu'il a été déterminé que l'identification de contenu dans le paquet de contenu numérique correspond à l'identification de contenu dans la licence d'autorisation, et que l'identification de dispositif dans le paquet de contenu numérique correspond à l'identification de dispositif dans la licence d'autorisation.

13. Dispositif de partage sécurisé de contenus numériques, comprenant :
un second module de réception pour recevoir des informations de droits depuis un premier dispositif, dans lequel les informations de droits indiquent que le premier dispositif permet à un deuxième dispositif de recommander d'autres dispositifs partageant des contenus numériques au premier dispositif ; et
un second module de transmission pour transmettre un premier degré de confiance de partage de contenu prédéfini lors de la réception des informations de droits, dans lequel le premier degré de confiance de partage de contenu indique un degré de confiance du deuxième dispositif dans la qualification du troisième dispositif pour partager les contenus numériques.

14. Dispositif de partage sécurisé de contenus numériques, comprenant :
un premier module de réception pour recevoir un premier degré de confiance de partage de contenu ;
un premier module de détermination pour déterminer un second degré de confiance de partage de contenu selon le premier degré de confiance de partage de contenu reçu et un degré de confiance de recommandation de partage de contenu prédéfini selon un procédé prédéfini ;
un premier module de jugement pour juger si le second degré de confiance de partage de contenu satisfait une condition pour autoriser le troisième dispositif à utiliser les contenus numériques ; et
un premier module de transmission pour autoriser le troisième dispositif à utiliser les contenus numériques après qu'il a été jugé que le second degré de confiance de partage de contenu satisfait la condition pour autoriser le troisième dispositif à utiliser les contenus numériques ;
dans lequel le second degré de confiance de partage de contenu indique un degré de confiance du premier dispositif dans la qualification du troisième dispositif pour partager les contenus numériques ; et le degré de confiance de recommandation de partage de contenu indique un degré de confiance du premier dispositif dans la recommandation par le deuxième dispositif du troisième dispositif pour partager les contenus numériques.
